# EUROPEAN PATENT SPECIFICATION

(11) **EP 3 517 319 B1**
(45) Date of publication and mention of the grant of the patent: **28.10.2020**
(21) Application number: 18212547.6
(22) Date of filing: 14.12.2018
(51) Int. Cl.: B60C 9/22, B60C 9/26, B29D 30/30, B29D 30/16, B60C 9/18

(54) **MOTORCYCLE TIRE**
MOTORRADREIFEN
PNEUMATIQUE DE MOTO

(30) Priority: 29.01.2018 JP 2018012944
(43) Date of publication of application: 31.07.2019
(73) Proprietor: SUMITOMO RUBBER INDUSTRIES, LTD., Kobe-shi, Hyogo 651-0072 (JP)
(72) Inventor: HIKITA, Masahiro, Kobe-shi, Hyogo 651-0072 (JP)
(74) Representative: TBK

(56) References cited:
- EP-A1- 2 070 690
- EP-A1- 3 069 862
- EP-A1- 3 225 427
- JP-B2- 3 053 287

## Description

### Technical field

The present invention relates to a motorcycle tire, more particularly to a tread reinforcing layer capable of improving high-speed stability performance and cornering performance.

### Background art

JP 2017 177842 A discloses a motorcycle tire provided in the tread portion with a band composed a center portion having a spiral cord structure, and shoulder portions on both sides thereof having a mesh-like cord structure.

Thus, the center portion can provide an increased binding force and a suppressed torsional rigidity. As a result, relatively, the torsional rigidity of the shoulder portions is enhanced, and the turning or cornering performance is improved.

EP 3 225 427 A1 discloses a motorcycle tire having the features of the preamble of claim 1. JP 3 053287 B2, EP 2 070 690 A1 and EP 3 069 862 A1 disclose further motorcycle tires.

### Summary of the invention

### Problems to be solved by the invention

In recent years, on the other hand, along with the improvement in performance of motorcycles, motorcycle tires are required to be further improved in high-speed stability performance and cornering performance.

Therefore, the present invention was made in view of the above circumstances, and a primary object of the present invention is to provide a motorcycle tire improved in the high-speed stability performance and turning or cornering performance.

This object is solved by a motorcycle tire having the features of claim 1. Advantageous further developments are set out in the dependent claims.

### Effects of the Invention

In the motorcycle tire according to the present invention, the plurality of circumferentially extending segments includes the plurality of inner circumferentially extending segments disposed at the most tire equator side, and extending along the tire circumferential direction, and further continued to the axially inner ends of the first inclining segments and second inclining segments.

Such inner circumferentially extending segments can enhance the binding force to a portion close to the crown region, and improves the high-speed stability performance.

In addition, the inner circumferentially extending segments can reduce the change in the rigidity at the boundary between the crown reinforcing part and the shoulder reinforcing part, and improve the turning or cornering performance in order to improve the transient characteristics during cornering.

The length in the tire circumferential direction of the inner circumferentially extending segments is 50% to 150% of the maximum length in the tire circumferential direction of the spaces. In this way, in the present invention, attention is paid to the ratio of the length in the tire circumferential direction of the inner circumferentially extending segments to the maximum length in the tire circumferential direction of the spaces. As a result, it was found that the effect of enhancing the binding force by the inner circumferentially extending segments, and the effect of enhancing the transient characteristics during cornering due to the change of the rigidity at the boundary between the crown reinforcing part and the shoulder reinforcing parts, are exerted in a well-balanced manner. Therefore, the motorcycle tire according to the present invention can be further improved in the high-speed stability performance and the cornering performance.

### Brief description of the drawings

Fig. 1 is a cross sectional view of a motorcycle tire as an embodiment of the present invention.
Fig. 2 is a schematic perspective view of a rubber-coated cord strip.
Fig. 3 is a schematic developed plan view of the tread reinforcing layer.
Fig. 4(a) and Fig. 4(b) are diagrams showing another example of the shoulder reinforcing part.
Fig. 5 is an enlarged partial view showing the shoulder reinforcing part and the crown reinforcing part shown in Fig. 3.
Fig. 6 is a diagram for explaining a process of winding the rubber-coated cord strip.
Fig. 7(a) and Fig. 7(b) are diagrams for explaining a process of forming the shoulder reinforcing part of an explanatory embodiment.
Fig. 8(a) and Fig. 8(b) are diagrams for explaining a process of forming the shoulder reinforcing part of another embodiment.
Fig. 9(a) and Fig. 9(b) show connection modes between the inclining portion and the circumferentially extending portion of the shoulder reinforcing part.

### Detailed description of the invention

Embodiments of the present invention will now be described in detail with reference to the accompanying drawings.

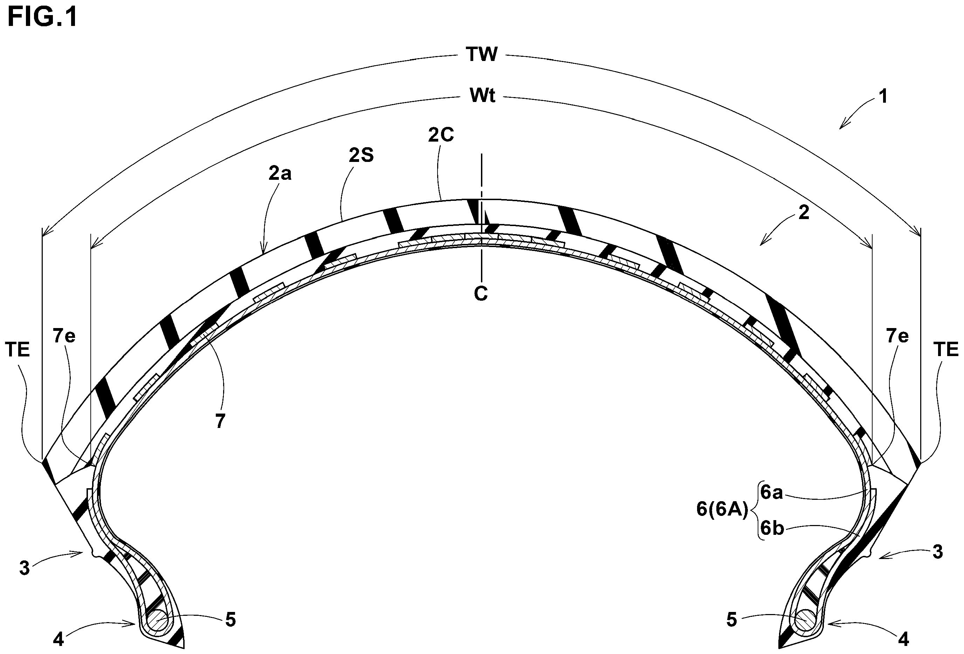

Fig. 1 is a meridian cross sectional view of a motorcycle tire as an embodiment of present invention under its normal state.

The "normal state" is a state in which the tire 1 is mounted on a standard rim (not shown), inflated to a standard pressure, and loaded with no tire load.

In the present specification, unless otherwise noted, dimensions of each part of the tire 1 refer to values measured under the normal state.

The "standard rim" is a rim specified for the tire in the standard system comprising the standard on which the tire 1 is based, for example, "Standard rim" for JATMA, "Design rim " for TRA, "Measuring rim " for ETRTO.

The "standard pressure" is an air pressure specified for the tire in the standard system comprising the standard on which the tire 1 is based, for example, "Maximum air pressure" for JATMA, "Inflation pressure" for ETRTO, Maximum value specified in "TIRE LOAD LIMITS AT VARIOUS COLD INFLATION PRESSURES" table for TRA.

As shown in Fig. 1, the tire 1 in this embodiment comprises a tread portion 2 having a tread surface 2a coming into contact with the ground, a toroidal carcass 6, and a tread reinforcing layer 7 disposed radially outside the carcass 6 in the tread portion 2.

The tread portion 2 is curved in an arc shape being convex toward the radially outside, and has a pair of tread edges TE. The tread edges TE are positioned on the most outsides in the tire axial direction.

The tread portion 2 has a crown region 2C including the tire equator C and a pair of shoulder regions 2S on both sides thereof.
The crown region 2C of this embodiment is positioned in a ground contacting region during straight running, namely, in a state where the tire 1 under its normal state is loaded with a normal load and the camber angle is zero.
The shoulder regions 2S are regions extending from the edges in the tire axial direction of the crown region 2C to the tread edges TE.

The "normal load" is a load specified for the tire in the standard system comprising the standard on which the tire 1 is based, for example, "Maximum load capacity" for JATMA, "Load capacity" for ETRTO, Maximum value specified in "TIRE LOAD LIMITS AT VARIOUS COLD INFLATION PRESSURES" table for TRA.

The carcass 6 is composed of at least one carcass ply 6A. For example, the carcass ply 6A is made of carcass cords rubberized with an unvulcanized topping rubber, and arranged at an angle of 75 to 90 degrees with respect to the tire equator C. For example, the carcass ply 6A comprises a main portion 6a extending from the tread portion 2 to bead cores 5 on both sides disposed in the bead portions 4 through the sidewall portions 3, and a pair of turnup portions 6b extending continuously from the main portion 6a.

In the meridian cross section of the tire, the tread reinforcing layer 7 extends curvedly along the tread portion 2 and is formed over the substantially entire width of the tread portion 2. As a result, the tread reinforcing layer 7 can increase the rigidity of the tread portion 2 over the entire width of the tread portion 2.

From this point of view, it is preferable that the width Wt of the tread reinforcing layer 7 measured along the tread surface 2a of the tread portion 2 is set in a range from 80% to 95% of the width TW between the tread edges TE measured along the tread surface 2a of the tread portion 2, namely, the developed tread width TW.

The tread reinforcing layer 7 of this embodiment is formed by winding a rubber-coated cord strip 9 around the carcass 6.

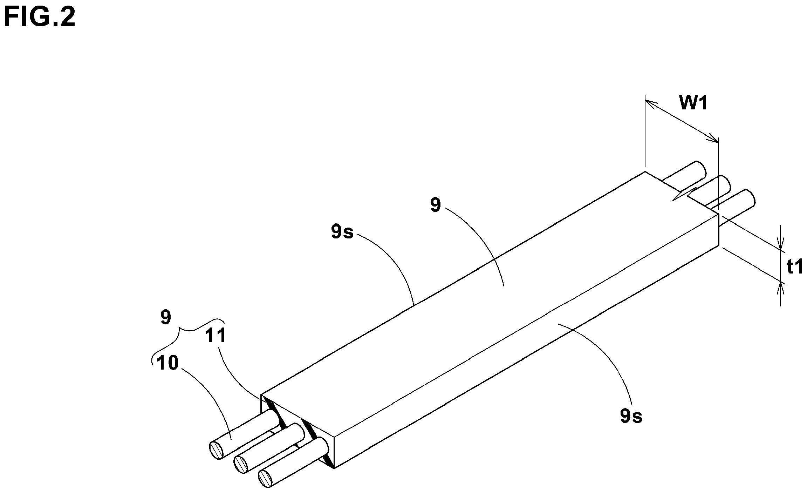

Fig. 2 is a perspective view of the rubber-coated cord strip 9. As shown in Fig. 2, the rubber-coated cord strip 9 has two side edges 9s extending in the longitudinal direction thereof, and has a substantially rectangular cross sectional shape.
The width W1 of the rubber-coated cord strip 9 is preferably set in a range from 2.5 to 12.0 mm, for example.
The thickness t1 of the rubber-coated cord strip 9 is preferably set in a range from 0.6 to 3.0 mm, for example.

The rubber-coated cord strip 9 is formed by covering one or more reinforcing cords 10 with an unvulcanized topping rubber 11. For example, steel cords and/or organic fiber cords are preferably used as the reinforcing cords 10. The reinforcing cords 10 extend in parallel with the side edge 9s.

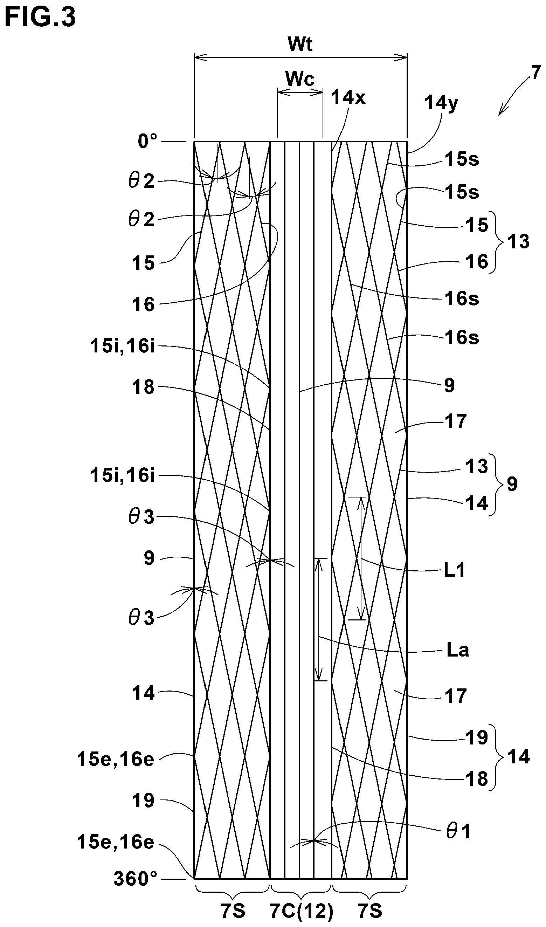

Fig. 3 is a developed plan view of the tread reinforcing layer 7 which is developed in the tire circumferential direction and axial direction.
In Fig. 3, the rubber-coated cord strip 9 is indicated by a single solid line (corresponding to the center line in the widthwise direction) for convenience sake.
Incidentally, as the tread portion 2 is curved in an arc shape protruding radially outwardly, the circumference of the tire is different between the tire equator C side and the tread edges TE side. However, since the tread reinforcing layer 7 in Fig. 3 is illustrated based on the angle with respect to the tire circumferential direction, the developed plan view of the tread reinforcing layer 7 is shown as a rectangle.

In this embodiment, as shown in Fig. 3, the tread reinforcing layer 7 is composed of
a crown reinforcing part 7C formed by winding the rubber-coated cord strip 9 around the crown region 2C, and
a pair of shoulder reinforcing parts 7S formed by winding the rubber-coated cord strip 9 around the shoulder regions 2S.
For example, the crown reinforcing part 7C and the pair of shoulder reinforcing parts 7S are formed from the rubber-coated cord strips 9 which are separate from each other.
However, it is also possible that the crown reinforcing part 7C and the pair of shoulder reinforcing parts 7S are formed from a single continuous rubber-coated cord strip 9.

The crown reinforcing part 7C of this embodiment includes a first circumferentially extending part 12 in which the rubber-coated cord strip 9 extends substantially in parallel with the tire circumferential direction.
Such crown reinforcing part 7C exerts a large restraining force on the crown region 2C contacting with the ground during straight running, so the deformation of the tread portion 2 due to the centrifugal force at high speed straight running can be suppressed. Further, such crown reinforcing part 7C can suppress the increase in torsional rigidity of the crown region 2C to produce a relatively low cornering power, therefore, it is possible to reduce reaction forces and vibrations caused by, for example, gaps of a road surface, to increase the ground contact. As a result, the crown reinforcing part 7C can improve high-speed stability performance.
In this embodiment, the crown reinforcing part 7C is formed by the first circumferentially extending part 12 only.

In this specification, the expansion "the rubber-coated cord strip extends substantially in parallel with the tire circumferential direction" means that the angle θ1 of the rubber-coated cord strip 9 is in a range from 0 to 8 degrees with respect to the tire circumferential direction.
In this specification, the values of the angle θ1 refer to those obtained by averaging the angle θ1 over the circumference of the tire in order to exclude a portion inclined at a large angle.

The maximum width Wc of the first circumferentially extending part 12 measured along the tread surface 2a of the tread portion 2 is preferably not less than 5%, more preferably not less than 10%, but preferably not more than 60%, more preferably not more than 45%, still more preferably not more than 30 of the developed tread width TW of the tread portion 2.

Each of the shoulder reinforcing parts 7S of this embodiment comprises
a plurality of inclining segments 13 in which the rubber-coated cord strip 9 is inclined, and
a plurality of circumferentially extending segments 14 in which the rubber-coated cord strip 9 extends substantially in parallel with the tire circumferential direction.

Both ends of each circumferentially extending segment 14 are connected to two of the inclining portions 13.

Each of the shoulder reinforcing parts 7S has the inner edge Ei on the tire equator C side and the outer edge Ee on the tread edge TE side.

The angle θ2 of the inclining portions 13 with respect to the tire circumferential direction is preferably set in a range from 2 to 10 degrees, more preferably 3 to 6 degrees.
By increasing the angle θ2 of the inclining portions 13, it is possible to increase the cornering power of the tire 1. In particular, when the camber angle is less than 20 degrees, the effect of increasing the cornering power is strongly exerted.

The angle θ3 of the circumferentially extending segment 14 with respect to the tire circumferential direction is smaller than the angle θ2 of the inclining portions 13.
The angle θ3 is preferably not more than 5 degrees, more preferably not more than 3 degrees, still more preferably not more than 1 degrees.

The plurality of inclining segments 13 of this embodiment includes
a plurality of first inclining segments 15 inclined to one side (diagonally right up in the figure) with respect to the tire circumferential direction, and
a plurality of second inclining segments 16 inclined to the other side (diagonally right down in the figure) opposite to the plurality of first inclining segments 15.
Such inclining portions 13 increase the torsional rigidity of the shoulder regions 2S contacting with the ground during turning to cause a high cornering power, therefore, the turning or cornering performance is improved.

In the plurality of inclining segments 13, the side edges 15s of the plurality of first inclining segments 15 are arranged so as not to contact with each other, and the side edges 16s of the plurality of second inclining segments 16 are arranged so as not to contact with each other.
As a result, the shoulder reinforcing parts 7S are formed as a mesh structure having a plurality of rhombic spaces 17 surrounded by the first inclining segments 15 and second inclining segments 16.
Thereby, a tension acting on a part of the shoulder reinforcing part 7S can be dispersed over a wide range of the mesh structure through portions of the rubber-coated cord strip 9 intersecting with each other, so the rigidity of the shoulder region 2S is increased and the cornering performance is improved.
In the present specification, the term "rhombic" shape refers to a shape surrounded by the first inclining segments 15 and second inclining segments 16 which segments extend straight, and it is not limited to a rhomboid in a strict sense, and it also includes a parallelogram and the like.
Further, the term "straight" is not limited to "straight" in a strict sense, and may be a slightly curved arc, for example, because the tread portion 2 is formed in an arc shape, but wavy and zigzag formed by repeating a unit are excluded.

The plurality of circumferentially extending segments 14 of this embodiment includes a plurality of inner circumferentially extending segments 18 which are disposed on the most tire equator side and which extend in the tire circumferential direction continuously from the axially inner end 15i of the plurality of first inclining segments 15 and the axially inner ends 16i of the plurality of second inclining segments 16,
Such inner circumferentially extending segments 18 enhance the binding force to a portion close to the crown region 2C, and thereby improve the high-speed stability performance.
In addition, since the inner circumferentially extending segments 18 reduce the change in rigidity between the crown region 2C and the shoulder regions 2S at the boundary between the crown reinforcing part 7C and the shoulder reinforcing parts 7S, the transient characteristics during cornering is improved and the cornering performance is improved.

In the present invention, attention is paid to the ratio between the length La in the tire circumferential direction of the plurality of inner circumferentially extending segments 18, and the maximum length L1 in the tire circumferential direction of the plurality of spaces 17.
That is, by decreasing the difference between the rigidity at the boundary between the crown region 2C and the shoulder regions 2S, and the rigidity of the crown region 2C and the rigidity of the shoulder regions 2S, the transient characteristics are further improved, and the inner circumferentially extending segments 18 exert a large binding force. As a result, the cornering performance and the high-speed stabilizing performance can be further improved. This was found by the inventors.

Therefore, in the present invention, the length La in the tire circumferential direction of the plurality of inner circumferentially extending segments 18 is set in a range from 50% to 150% of the maximum length L1 in the tire circumferential direction of the plurality of spaces 17.
In this embodiment, the maximum length L1 of the spaces 17 closest to the inner circumferentially extending segments 18 is adopted.

In this embodiment, the inner circumferentially extending segments 18 are provided at the same axial position as the intersecting positions, on the most tire equator C side, between the first inclining segments 15 and the second inclining segments 16.
As a result, the length La in the tire circumferential direction of the inner circumferentially extending segments 18 becomes equal to 100% of the maximum length L1 in the tire circumferential direction of the spaces 17.

If the length La is less than 50% of the maximum length L1, then the area where the inner circumferentially extending segments 18 are disposed becomes small, and, for example, the possibility of puncture by nails, rocks etc. will increase.
If the length La is more than 150% of the maximum length L1, then the inner circumferentially extending segments 18 overlap in the tire radial direction, and there is a possibility that uniformity is deteriorated and the high-speed stability performance is deteriorated.

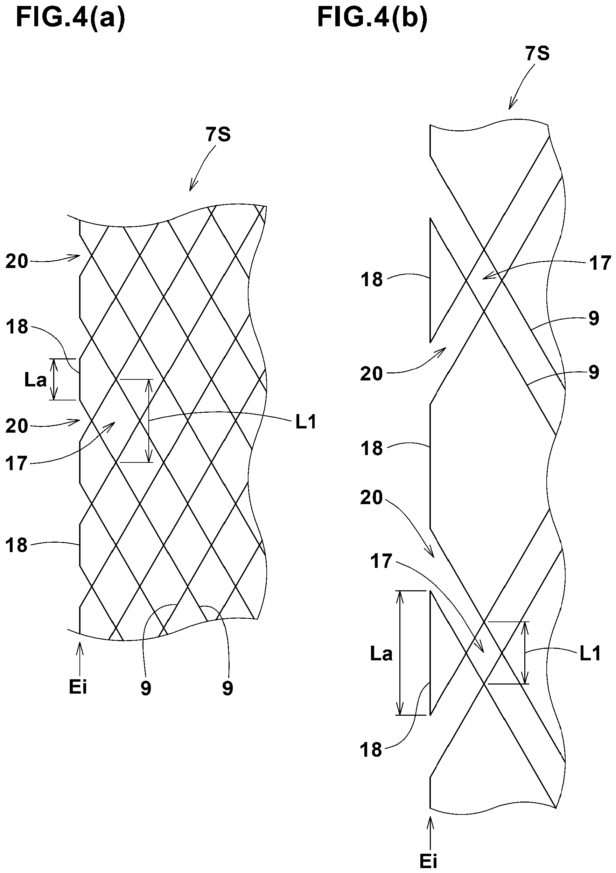

Fig. 4(a) shows the shoulder reinforcing parts 7S in which the length La of the inner circumferentially extending segments 18 is smaller than the maximum length L1 of the spaces 17. In this shoulder reinforcing part 7S, the inner circumferentially extending segments 18 are arranged at the inner edge Ei with gaps 20 alternating in the tire circumferential direction.
The inner circumferentially extending segments 18 are arranged so as to be displaced in the tire axial direction from the intersecting positions, on the most tire equator side, between the first inclining segments 15 and the second inclining segments 16.

Fig. 4(b) shows the showing shoulder reinforcing part 7S in which the length La of the inner circumferentially extending segments 18 is larger than the maximum length L1 of the spaces 17. In this shoulder reinforcing part 7S, too, the inner circumferentially extending segments 18 are arranged at the inner edge Ei with gaps 20 alternating in the tire circumferential direction.

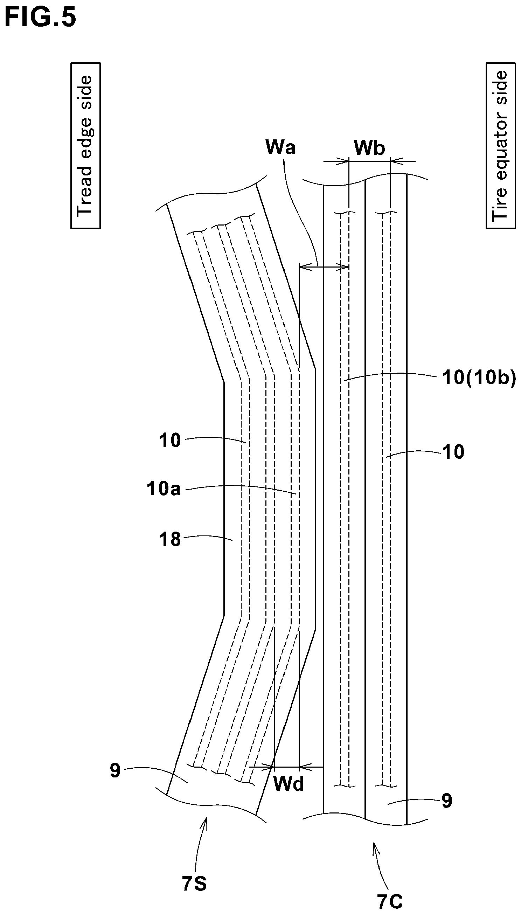

Fig. 5 is an enlarged view showing the vicinity of the boundary between the shoulder reinforcing part 7S and the crown reinforcing part 7C.

It is preferable that, as shown in Fig. 5, an axial distance Wa is smaller than 500% of an axial distance wb, wherein
the axial distance Wa is a distance between the axially innermost reinforcing cord 10a in the inner circumferentially extending segment 18, and the reinforcing cord 10b in the crown reinforcing part 7C which cord is adjacent to the above-said axially innermost reinforcing cord 10a in the tire axial direction, and
the axial distance wb is a distance between the reinforcing cords 10 in the crown reinforcing part 7C which are adjacent to each other in the tire axial direction.

If the axial distance Wa is more than 500% of the axial distance wb, then a change in the difference between the rigidity of the portion where the inner circumferentially extending segments 18 are disposed and the rigidity of the crown reinforcing part 7C is increased, and there is a possibility that the transient characteristics are deteriorated.
Further, if the axial distance Wa is more than 500% of the distance wb, the density of the reinforcing cords 10 decreases and the possibility of puncture due to nails, rocks, etc. may increase.

If the axial distance Wa is excessively smaller than the axial distance wb, the difference in the rigidity between the shoulder reinforcing parts 7S and the crown reinforcing part 7C becomes too large, and the transient characteristic may be deteriorated. Therefore, it is preferable that the axial distance Wa is not less than 50% of the axial distance wb.

Although not particularly limited, the axial distance wd between the reinforcing cords 10 adjacent to each other in the tire axial direction of the shoulder reinforcing parts 7S is preferably set in a range from 70% to 130% of the above-mentioned axial distance wb.

It is preferable that the crown reinforcing part 7C has a jointless structure in which the rubber-coated cord strip 9 is wound spirally. Thus, in this embodiment, the crown reinforcing part 7C is formed by spirally winding the rubber-coated cord strip 9 circumferentially of the tire plural times. This further enhances the high-speed stability performance.

Preferably, the rubber-coated cord strip 9 forming the crown reinforcing part 7C has a single reinforcing cord 10 embedded in the longitudinal direction. This increases the torsional rigidity of the crown region 2C, so the difference in torsional rigidity from the shoulder regions 2S having high torsional rigidity can be decreased, and the transient performance is further improved.
It is preferable that such rubber-coated cord strip 9 having the single reinforcing cord 10 has a width W1 of from 2.5 to 3.5 mm, and a thickness t1 of from 0.6 to 3.0 mm.

As shown in Fig. 3, the circumferentially extending segments 14 of each of the shoulder reinforcing parts 7S further include a plurality of outer circumferentially extending segments 19 which are disposed on the axially outermost side and extend in the tire circumferential direction.
In this embodiment, the outer circumferentially extending segments 19 are connected to the axially outer end 16e of the second inclining segments 16 and the axially outer end 15e of the first inclining segments 15.
Such outer circumferentially extending segments 19 can reduce bending stress acting on the reinforcing cords 10 of the rubber-coated cord strip 9, for example, as compared with the case where the first inclining segment 15 and the second inclining segment 16 are directly connected to each other.
Further, the outer circumferentially extending segments 19 cause a relatively small cornering power in the axially outer edge 7e side of the tread reinforcing layer 7 to reduce the reaction force and vibration. As a result, the sense of ground contacting during full-bank traveling is improved and the turning performance is further improved.

It is preferable that the outer circumferentially extending segments 19 are formed in the same shape as the inner circumferentially extending segments 18.

In this embodiment, by the plurality of inner circumferentially extending segments 18, there is formed a virtual circumferentially-continuous portion 14x extending continuously in the tire circumferential direction making one turn. In this embodiment, further, by the plurality of outer circumferentially extending segments 19, there is formed a virtual circumferentially-continuous portion 14y extending continuously in the tire circumferential direction making one turn.
Such inner circumferentially extending segments 18 and outer circumferentially extending segments 19 can enhance the transient characteristics and a sense of ground contacting during full-bank traveling, and the cornering performance can be further improved.

Next, a method for manufacturing such a tire 1 will be described.

The tire 1 in this explanatory embodiment is manufactured through a step of forming a green tire and a step of vulcanization molding the green tire.

The step of forming the green tire includes a tread reinforcing layer forming step for forming the tread reinforcing layer 7 described above.

The tread reinforcing layer forming step includes a winding step of winding the long rubber-coated cord strip 9. Except for the winding step in the tread reinforcing layer forming step, descriptions of the step of forming the green tire and the step of vulcanization molding the green tire are omitted since known steps can be adopted therefor.

In the winding step in this explanatory embodiment, for the one crown region 2C and the two shoulder regions 2S, different rubber-coated cord strips 9 are wound.

That is, the winding step includes
a crown winding step for forming the crown reinforcing part 7C by winding a rubber-coated cord strip 9,
a first shoulder winding step for forming one of the shoulder reinforcing parts 7S by winding a rubber-coated cord strip 9, and
a second shoulder winding step for forming the other of the shoulder reinforcing parts 7S by winding a rubber-coated cord strip 9.

In this explanatory embodiment, the winding step is performed in the order of the first shoulder winding step, the crown winding step, and the second shoulder winding step. However, the winding step is not limited to such order, for example, may be started from the crown winding step or the second shoulder winding step.

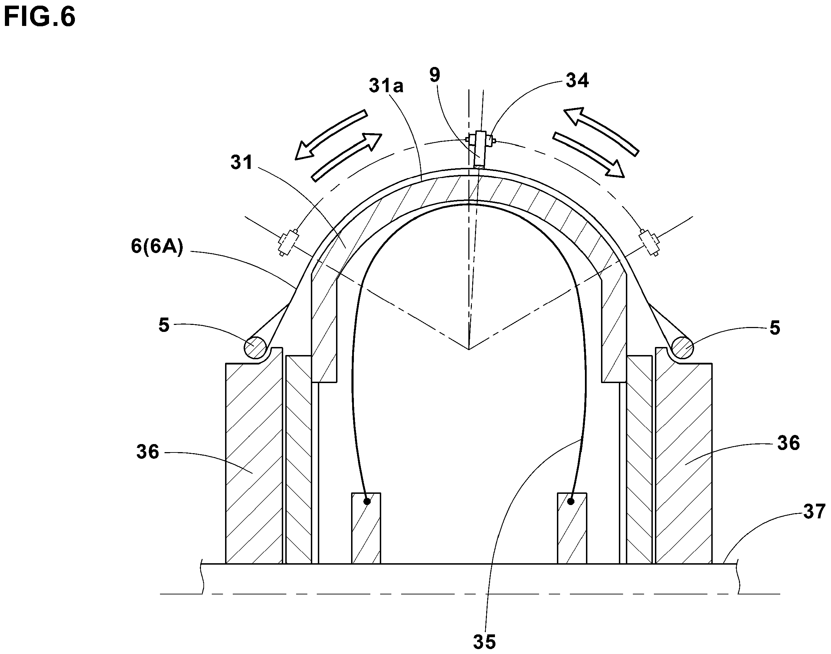

Fig. 6 is a diagram for explaining the winding step. As shown in Fig. 6, in the winding step, the rubber-coated cord strip 9 is wound on the outer circumferential surface 31a of a profiled drum 31, directly or through the carcass 6.

The profile drum 31 in this explanatory embodiment is of a well-known structure having an outer circumferential surface 31a provided with a profile curved convexly toward the radially outside. The profile drum 31 is composed of a plurality of segments, for example, and the outer circumferential surface 31a is configured to be expandable/contractible by radially moving an expansion device 35 disposed inside the profile drum 31.

On both sides of the profile drum 31, for example, a pair of carcass holding devices 36 of a well-known structure are disposed. The carcass holding device 36 is a ring-shaped member movable in the axial direction, and attached to the support shaft 37, and can rotate concentrically and integrally with the profile drum 31. The carcass holding devices 36 can hold the cylindrical carcass 6 together with the bead cores 5.

The rubber-coated cord strip 9 is continuously supplied to the profile drum 31 by, for example, a known applicator 34. The applicator 34 is reciprocated in an arced locus along the outer circumferential surface 31a of the profile drum 31 by, for example, a well-known three-dimensional moving device (not shown) or the like. As a result, the rubber-coated cord strip 9 is accurately wound on the outer circumferential surface 31a.

In the first shoulder winding step of this explanatory embodiment, on the carcass ply 6A, the winding of the rubber-coated cord strip 9 is started.

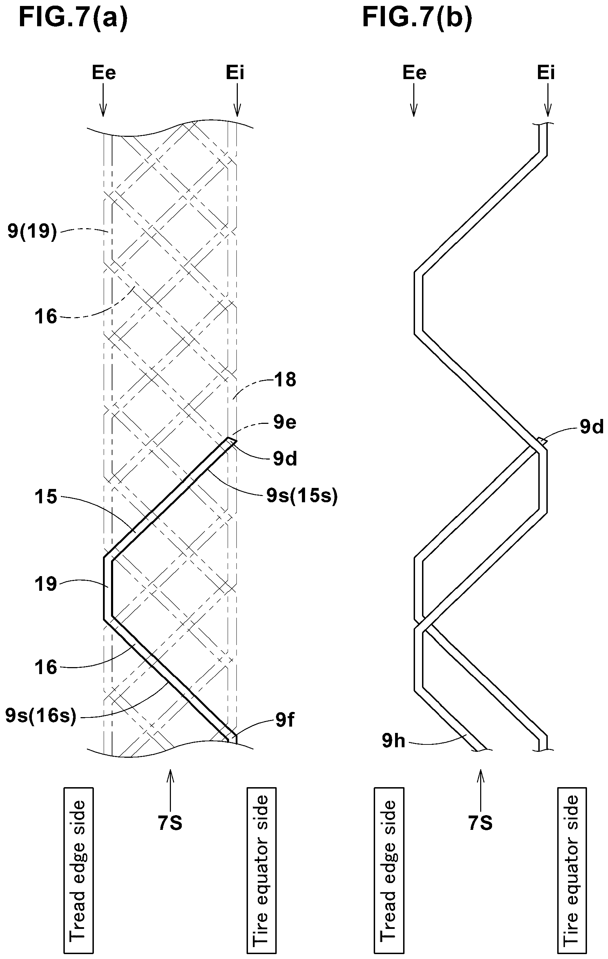

Figs. 7(a) and 7(b) conceptually illustrate the first shoulder winding step of this explanatory embodiment.

Fig. 7(a) is a plan view showing a state of the shoulder reinforcing part 7S immediately after the winding of the rubber-coated cord strip 9 is started, wherein
turns of the rubber-coated cord strip 9 not yet wound are indicated by imaginary lines, and a turn of the rubber-coated cord strip 9 partially wound is indicated by solid lines and reference numeral 9f.

Fig. 7 (b) is a plan view showing a state of the shoulder reinforcing part 7S when the winding of the rubber-coated cord strip 9 has been progressed more than Fig. 7(a), wherein
a turn of the rubber-coated cord strip 9 completely wound is indicated by solid lines and reference numeral 9h, and
a turn partially wound is indicated by solid lines and reference numeral 9d.

In the first shoulder winding step, as shown in Fig. 7(a), first, a winding start end 9d of the rubber-coated cord strip 9 when starting the winding is fixed, for example, to the inner edge Ei of the shoulder reinforcing part 7S.
Incidentally, the winding start end 9d may be fixed to the outer end Ee of the shoulder reinforcing part 7S or a position on one of the inclining portions 13.

In the rubber-coated cord strip 9 wound in the first shoulder winding step, a plurality of reinforcing cords 10, for example, three reinforcing cords 10 are embedded in the topping rubber.

Then, in the first shoulder winding step, the applicator 34 applies the rubber-coated cord strip 9 to the outer circumferential surface 31a of the rotating profile drum 31 while reciprocating between the inner edge Ei and the outer edge Ee. In this step, as shown in Fig. 7, the rubber-coated cord strip 9 is wound in a zigzag shape comprising the first inclining segments 15 and the second inclining segments 16 so that the side edges 9s of the rubber-coated cord strip 9 are not in contact with each other.

In the first shoulder winding step of this explanatory embodiment, a first inclining segment 15, an outer circumferentially extending segment 19, a second inclining segment 16, and an inner circumferentially extending segment 18 are wound in this order, and these are repeated to make one turn until a plurality of turns are formed. In this explanatory embodiment, therefore,
one end and the other end of each inner circumferentially extending segment 18 are respectively connected to one of the first inclining segments 15 and one of the second inclining segments 16, and
one end and the other end of each outer circumferentially extending segment 19 are respectively connected to one of the second inclining segments 16 and one of the first inclining segments 15.

Through this step, the rubber-coated cord strip 9 can be formed into a mesh having rhombic spaces 17 surrounded by the first inclining segments 15 and the second inclining segments 16.

In the first shoulder winding step of this explanatory embodiment, one end of each inner circumferentially extending segment 18 substantially coincides in the tire circumferential direction with the other end of one of the inner circumferentially extending segments 18 which is adjacent in the tire circumferential direction to the above-said one end.

Further, in this explanatory embodiment, one end of each outer circumferentially extending segment 19 substantially coincides in the tire circumferential direction with the other end of one of the outer circumferentially extending segments 19 which is adjacent in the tire circumferential direction to the above-said one end. Such arrangement further enhances the binding force at the boundary portion between the crown reinforcing part 7C and the shoulder reinforcing parts 7S, and further enhances the high-speed stability performance.

The first shoulder winding step is however, not limited to such arrangement. For example, it is possible that one end of each inner circumferentially extending segment 18 is separated in the tire circumferential direction from the other end of one of the inner circumferentially extending segments 18 which is adjacent in the tire circumferential direction to the above-said one end.

Further, it is possible that one end of each inner circumferentially extending segment 18 is overlapped in the tire circumferential direction with the other end of one of the inner circumferentially extending segments 18 which is adjacent in the tire circumferential direction to the above-said one end.

These overlap arrangement or separate arrangement can be also applied to the outer circumferentially extending segments 19 as well.

In the first shoulder winding step, it is preferable that the winding stop end 9e of the rubber-coated cord strip 9 when ending the winding is fixed so as to continue to the winding start end 9d in the tire circumferential direction.

In this explanatory embodiment, the inner circumferentially extending segments 18 are arranged in line, and form corners with the first inclining segments 15 and the second inclining segments 16. It is also possible that the outer circumferentially extending segments 19 are arranged in line, and form corners with the first inclining segments 15 and the second inclining segments 16.

Next, the crown winding step is performed for example. In this explanatory embodiment, the crown winding step is performed, using one rubber-coated cord strip 9 different from that in the first shoulder winding step.

In the rubber-coated cord strip 9 wound in the crown winding step, a single reinforcing cord 10 is embedded along the longitudinal direction.

In the crown winding step of this explanatory embodiment, the rubber-coated cord strip 9 is wound spirally one or more times from one edge to the other edge in the tire axial direction of the crown reinforcing part 7C by the use of the applicator 34. In the crown winding step, it is also possible to spirally wind the rubber-coated cord strip 9 from the other edge to the one edge in the tire axial direction of the crown reinforcing part 7C.

In the crown winding step, it is preferable that the winding start end and the winding stop end of the rubber-coated cord strip 9 are fixed to substantially same circumferential positions at different axial positions.

Next, a second shoulder winding step is performed.

In this explanatory embodiment, the second shoulder winding step is performed by using one rubber-coated cord strip 9 different from that in the crown winding step.

Since the second shoulder winding step is performed in the same manner as the first shoulder winding step, its detailed explanation is omitted.

In this way, the tread reinforcing layer 7 is formed.

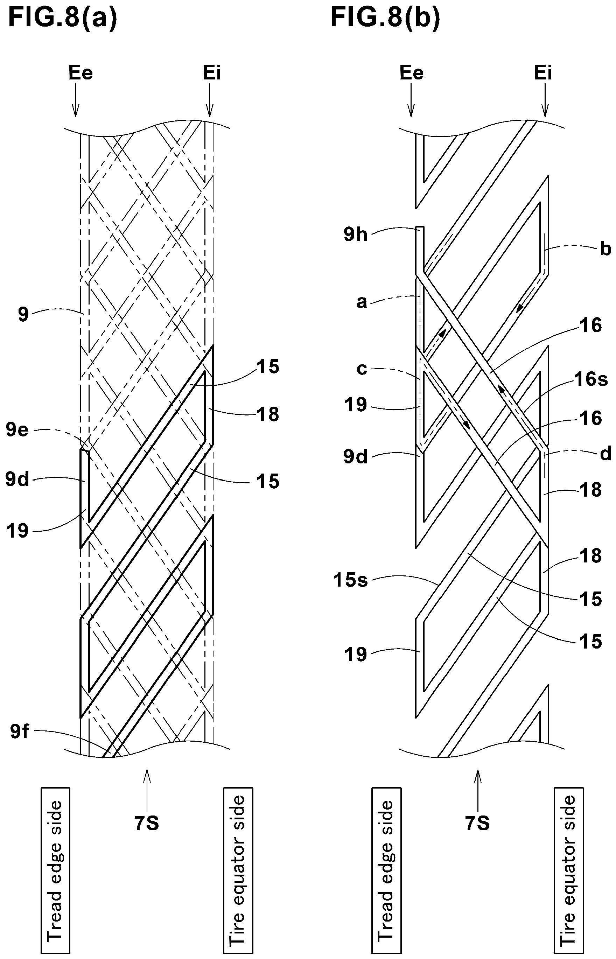

Figs. 8(a) and 8(b) schematically show a first shoulder winding step or a second shoulder winding step of another embodiment.

Fig. 8(a) is a plan view showing a state of the shoulder reinforcing part 7S immediately after the winding of the rubber-coated cord strip 9 is started, wherein
turns of the rubber-coated cord strip 9 not yet wound are indicated by imaginary lines, and
a turn of the rubber-coated cord strip 9 partially wound is indicated by solid lines and reference numeral 9f.

Fig. 8(b) is a plan view showing a state of the shoulder reinforcing part 7S when the winding of the rubber-coated cord strip 9 has been progressed more than Fig. 8(a), wherein
a turn of the rubber-coated cord strip 9 partially wound is indicated by reference numeral 9h, and
the rubber-coated cord strip 9 is wound in the order indicated by allowed imaginary lines a, b, c and d.

The same reference numerals are given to the same parts as those in the explanatory embodiment of Fig. 7, and the description thereof is omitted. Also in this embodiment, since the second shoulder winding step is the same as the first shoulder winding step, a detailed description thereof will be omitted.

In the first shoulder winding step of this embodiment, the winding start end 9d at the beginning of winding of the rubber-coated cord strip 9 is fixed to the outer edge Ee of the shoulder reinforcing part 7S.

Incidentally, the winding start end 9d may be fixed to the inner edge Ei or a position on one of the inclining portions 13 of the shoulder reinforcing parts 7S.

Next, the applicator 34 supplies the rubber-coated cord strip 9 to the outer circumferential surface 31a of the rotating profiled drum 31 while reciprocating between the inner edge Ei and the outer edge Ee.

In this step, as shown in Fig. 8(a), firstly, the rubber-coated cord strip 9 is wound in the order of the first inclining segment 15, the inner circumferentially extending segment 18, the first inclining segment 15, the outer circumferentially extending segment 19, the first inclining segment 15 ---.

Next, as shown in Fig. 8(b), the rubber-coated cord strip 9 is wound in the order of the second inclining segment 16, the inner circumferentially extending segment 18, the second inclining segment 16, the outer circumferentially extending segment 19, the second inclining segment 16 ---.
That is, in this embodiment, the shoulder reinforcing part 7S is formed such that both ends of each inner circumferentially extending segment 18 are connected to two of the first inclining segments 15 adjacent to each other in the tire circumferential direction, or two of the second inclining segments 16 adjacent to each other in the tire circumferential direction.

And the side edges 15s of the plurality of first inclining segments 15 are disposed so as not to contact with each other, and the side edges 16s of the plurality of second inclining segments 16 are arranged so as not not to contact with each other. As a result, the shoulder reinforcing part 7S is provided with a mesh structure having a plurality of rhombic spaces 17 surrounded by the first inclining segments 15 and the second inclining segments 16.

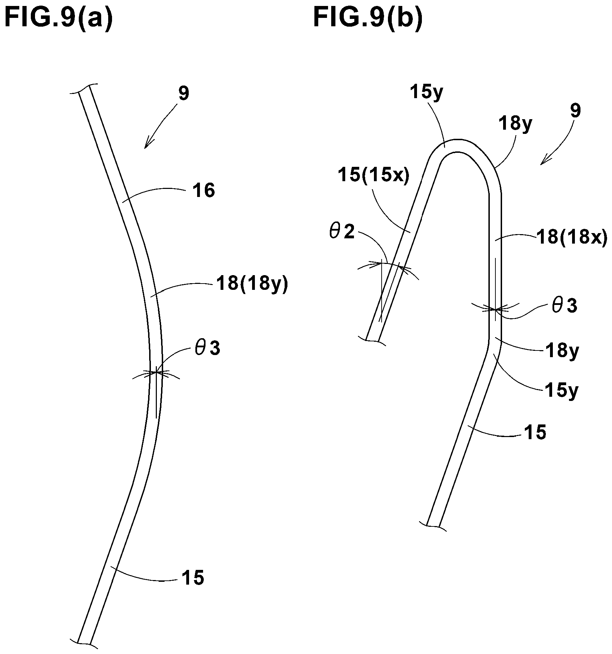

Fig. 9(a) is a plan view showing another example of the connection of the first inclining segment 15, the second inclining segment 16 and the inner circumferentially extending segment 18. In this example, the inner circumferentially extending segment 18 includes an arcuate portion 18y. In this example, the inner circumferentially extending segments 18 is formed by the arcuate portion 18y only. The arcuate portion 18y is smoothly connected to the first inclining segment 15 and the second inclining segment 16.
In this example, the angle θ3 of the inner circumferentially extending segment 18 is set in a range of not more than 5 degrees with respect to the tire circumferential direction.

In addition to the inner circumferentially extending segments 18, the outer circumferentially extending segment 19 may be formed by an arcuate portion so as to be smoothly continuous with the first inclining segment 15 and the second inclining segment 16 in the same manner as shown in Fig. 9(a). As a result, the bending stress acting on the reinforcing cords 10 of the rubber-coated cord strip 9 is reduced, and the cornering performance is improved.

Fig. 9(b) is a plan view showing another example of the connection of the inner circumferentially extending segment 18 and the inclining segments 13 (in the figure, first inclining segments 15).
In this example, the first inclining segment 15 comprises
a main portion 15x extending substantially straight at the above-mentioned angle θ2 of at least 2 degrees with respect to to the tire circumferential direction, and
an arcuate portion 15y smoothly continued from the main portion 15x and extending in an arc shape.
The inner circumferentially extending segment 18 comprises a main portion 18x extending substantially straight at the above-mentioned angle θ3 of not more than 5 degrees in the tire circumferential direction, and an arcuate portion 18y smoothly continued from the main portion 18x and extending in an arc shape.
The main portion 15x of the first inclining segment 15 and the main portion 18x of the inner circumferentially extending segment 18 are smoothly connected via the arcuate portion 15y and the arcuate portion 18y.
Needless to say, such connection mode can be applied to the connection between the inner circumferentially extending segment 18 and the second inclining segments 16,
the connection between the outer circumferentially extending segment 19 and the first inclining segments 15, and/or the connection between the outer circumferentially extending segment 19 and the second inclining segments 16.

Further, as another embodiment, it is also possible to form each shoulder reinforcing part 7S by winding a plurality of rubber-coated cord strips 9 (not shown).

### working Examples

Motorcycle tires having the basic structure shown in Fig. 1 and tread reinforcing layers formed based on that shown in Fig. 3 were experimentally manufactured. The specifications are shown in Table 1.

The tread reinforcing layer of the conventional tire was formed by winding a rubber-coated cord strip spirally from one edge to the other edge of the tread reinforcing layer like a crown reinforcing part 7C.

These tires were tested for the high-speed stability performance, cornering performance, cornering force and puncture resistance.
Common specifications are as follows.
Rubber-coated cord strip for the shoulder reinforcing parts:
4.0 mm in width, 1.0 mm in thickness, three reinforcing cords embedded
Rubber-coated cord strip for the crown reinforcing part:
2.5 mm in width, 1.0 mm in thickness, one reinforcing cord embedded
width Wt of the tread reinforcing layer: 90% of TW
Maximum width Wc of the first circumferentially extending part: 12% of TW

Test methods are as follows.

### < High-speed stability performance and cornering performance >

The test tires were mounted on all wheels of a 130cc motorcycle under the following conditions.
Front wheel: tire size 120/70ZR17, rim size 17M/CxMT3.50, tire pressure 250 kPa
Rear wheel: tire size 190/55ZR17, rim size 17M/CxMT5.50, tire pressure 250 kPa

The motorcycle was run on a dry asphalt road in a test course, and the test tire was evaluated by the test rider based on high-speed running characteristics relating to handling stability, grip and the like, and cornering performance relating to transient characteristics during cornering, operability of the handle and the like.
The results are indicated in Table 1 by an index based on Comparative Example 1 being 100, wherein the larger value is better.

### < Cornering force (Cornering Power) >

Using an indoor tire testing machine, the cornering force of each test tire was measured under the following conditions in order to obtain
a value CF(-1 degree) at the slip angle of -1 degree and
a value CF(+1 degree) at the slip angle of +1 degree.
Tire size: 190/55 ZR 17
Tire pressure: 200 kPa
Tire load: 1.3 kN
Running speed: 30 km/h
Then, the cornering power was obtained as {CF(+1 degree) - CF(-1 degrees)}/2. Namely, the cornering power obtained herein is the cornering force per 1 degree of the slip angle.
The results are indicated in Table 1 by an index based on Comparative Example 1 being 100, wherein the larger the value, the higher the cornering power.

### < Puncture resistance >

According to the plunger test procedure specified in Japanese Industrial Standard JIS K 6366, the breaking energy of each test tire was measured.
The results are indicated in Table 1 by an index based on Comparative Example 1 being 100, wherein the larger value is better.

-- [0073]

**TABLE 1**

| tire | conventional | comparative 1 | comparative 2 | example 1 |
|---|---|---|---|---|
| La/L1 (%) | - | 40 | 160 | 100 |
| shoulder reinforcing parts (Fig. No.) | - | 7 | 7 | 7 |
| Wa/Wb(%) | - | 100 | 100 | 100 |
| number of cord(s) *1 | 1 | 1 | 1 | 1 |
| θ2 (deg.) | 0 | 3 | 3 | 3 |
| high-speed stability performance | 110 | 100 | 90 | 120 |
| cornering performance | 90 | 100 | 110 | 120 |
| cornering power | 95 | 100 | 95 | 115 |
| puncture resistance | 100 | 100 | 105 | 100 |
| | | | | |

| tire | example 2 | example 3 | example 4 | example 5 |
|---|---|---|---|---|
| La/L1 (%) | 50 | 150 | 100 | 100 |
| shoulder reinforcing parts (Fig. No.) | 7 | 7 | 7 | 7 |
| Wa/Wb(%) | 100 | 100 | 550 | 500 |
| number of cord(s) *1 | 1 | 1 | 1 | 1 |
| θ2 (deg.) | 3 | 3 | 3 | 3 |
| high-speed stability performance | 110 | 95 | 115 | 115 |
| cornering performance | 110 | 115 | 115 | 120 |
| cornering power | 105 | 110 | 105 | 110 |
| puncture resistance | 100 | 100 | 95 | 100 |
| | | | | |

| tire | example 6 | example 7 | example 8 | |
|---|---|---|---|---|
| La/L1 (%) | 100 | 100 | 100 | |
| shoulder reinforcing parts (Fig. No.) | 7 | 7 | 8 | |
| Wa/Wb(%) | 100 | 100 | 100 | |
| number of cord(s) *1 | 2 | 1 | 1 | |
| θ2 (deg.) | 3 | 6 | 3 | |
| high-speed stability performance | 120 | 110 | 120 | |
| cornering performance | 115 | 125 | 120 | |
| cornering power | 110 | 120 | 115 | |
| puncture resistance | 105 | 100 | 100 | |

| | | | | |
|---|---|---|---|---|
| *1) Number of the reinforcing cord(s) embedded in the rubber-coated cord strip for forming the crown reinforcing part. | | | | |

### -- [0074]

As a result of the tests, it was confirmed that the tire of each example is superior in balance to the tire of the comparative example.

### Description of the reference signs

- 1: motorcycle tire
- 2: tread portion
- 7S: shoulder reinforcing part
- 9: rubber-coated cord strip
- 13: inclining portion
- 14: circumferentially extending segment
- 15: first inclining segment
- 16: second inclining segment
- 17: space
- 18: inner circumferentially extending segment

## Claims

1. A motorcycle tire (1) comprising:
a toroidal carcass (6), and
a tread reinforcing layer (7) disposed radially outside the carcass (6) in a tread portion (2),
wherein
the tread reinforcing layer (7) comprises
a crown reinforcing part (7C) formed by a rubber-coated cord strip (9) of at least one rubberized reinforcing cord (10) covered with topping rubber (11), the rubber-coated cord strip (9) being wound around a crown region (2C) including the tire equator (C), and
a pair of shoulder reinforcing parts (7S) formed by a rubber-coated cord strip (9) which is wound around shoulder regions (7S) on both sides of the crown region (2C),
wherein
the crown reinforcing part (7C) includes
a first circumferentially extending part (12) in which the rubber-coated cord strip (9) extends substantially parallel to the tire circumferential direction,
the pair of shoulder reinforcing parts (7S) each comprise
a plurality of inclining segments (13) in which the rubber-coated cord strip (9) is inclined with respect to the tire circumferential direction, and
a plurality of circumferentially extending segments (14) in which the rubber-coated cord strip (9) extends substantially parallel to the tire circumferential direction,
wherein
the plurality of inclining segments (13) includes
a plurality of first inclining segments (15) inclined to one side with respect to the tire circumferential direction, and a plurality of second inclining segments (16) inclined to the other side opposite to the first inclining segments (15) with respect to the tire circumferential direction, and
side edges (15s) of the plurality of first inclining segments (15) are arranged so as not to contact with each other, and side edges (16s) of the plurality of second inclining segments (16) are arranged so as not to contact with each other, whereby a mesh having a plurality of rhombic spaces (17) surrounded by the first inclining segments (15) and second inclining segments (16) is formed,
the plurality of circumferentially extending segments (14) include a plurality of inner circumferentially extending segments (18) disposed at the most tire equator side, and extending in the tire circumferential direction continuously from the axially inner ends (15i, 16i) of the first inclining segments (15) and the second inclining segments (16),
the plurality of inner circumferentially extending segments (18) has a length (La) in the tire circumferential direction which is in a range from 50% to 150% of a maximum length (L1) in the tire circumferential direction of the plurality of rhombic spaces (17), and
both ends of each of the plurality of inner circumferentially extending segments (18) are connected to two of the circumferentially adjacent first inclining segments (15) or two of the circumferentially adjacent second inclining segments (16),
**characterized in that**
the circumferentially extending segments (14) of each of the shoulder reinforcing parts (7S) further include a plurality of outer circumferentially extending segments (19) which are disposed on the axially outermost side and extend in the tire circumferential direction, and
the rubber coated cord strip (9) is wound in the order of the first inclining segment (15), the inner circumferentially extending segment (18), the first inclining segment (15), the outer circumferentially extending segment (19), the first inclining segment (15) and so on, followed by the order of the second inclining segment (16), the inner circumferentially extending segment (18), the second inclining segment (16), the outer circumferentially extending segment (19), the second inclining segment (16) and so on.

2. The motorcycle tire (1) according to claim 1, wherein
the axial distance (Wa) between
the axially innermost reinforcing cord (10) in each of the plurality of inner circumferentially extending segments (18), and
the reinforcing cord (10) in the crown reinforcing part (7C) which cord is adjacent in the tire axial direction to the above-said axially innermost reinforcing cord (10),
is less than 500% of the axial distance (Wb) between the adjacent reinforcing cords (10) in the crown reinforcing part (7C).

3. The motorcycle tire (1) according to claim 1 or 2, wherein
the crown reinforcing part (7C) has a jointless structure in which the rubber-coated cord strip (9) is wound spirally.

4. The motorcycle tire (1) according to claim 3, wherein
the rubber-coated cord strip (9) forming the crown reinforcing part (7C) has only one reinforcing cord (10).

## Patentansprüche

1. Motorradreifen (1) mit:
einer toroidalen Karkasse (6), und
einer Laufflächenverstärkungsschicht (7), die radial außerhalb der Karkasse (6) in einem Laufflächenabschnitt (2) angeordnet ist,
wobei
die Laufflächenverstärkungsschicht (7)
ein Kronenverstärkungsteil (7C), das durch einen gummibeschichteten Cordstreifen (9) aus mindestens einem gummierten Verstärkungscord (10) gebildet ist, der mit Abdeckgummi (11) überzogen ist, wobei der gummibeschichtete Cordstreifen (9) um einen Kronenbereich (2C), der den Reifenäquator (C) enthält, gewickelt ist, und
ein Paar Schulterverstärkungsteile (7S) aufweist, die durch einen gummibeschichteten Cordstreifen (9) gebildet sind, welcher um Schulterbereiche (7S) auf beiden Seiten des Kronenbereichs (2C) gewickelt ist,
wobei
das Kronenverstärkungsteil (7C)
einen ersten sich in Umfangsrichtung erstreckenden Teil (12) hat, in welchem sich der gummibeschichtete Cordstreifen (9) im Wesentlichen parallel zu der Reifenumfangsrichtung erstreckt,
das Paar Schulterverstärkungsteile (7S) jeweils
eine Vielzahl von geneigten Segmenten (13), in welchen der gummibeschichtete Cordstreifen (9) mit Bezug auf die Reifenumfangsrichtung geneigt ist, und
eine Vielzahl von sich in Umfangsrichtung erstreckenden Segmenten (14) haben, in welchen sich der gummibeschichtete Cordstreifen (9) im Wesentlichen parallel zu der Reifenumfangsrichtung erstreckt,
wobei
die Vielzahl von geneigten Segmenten (13)
eine Vielzahl von ersten geneigten Segmenten (15) hat, die mit Bezug auf die Reifenumfangsrichtung zu einer Seite hin geneigt sind, und eine Vielzahl von zweiten geneigten Segmenten (16) hat, die mit Bezug auf die Reifenumfangsrichtung zu der anderen Seite hin geneigt sind, die entgegengesetzt zu den ersten geneigten Segmenten (15) ist, und
Seitenkanten (15s) der Vielzahl von ersten geneigten Segmenten (15) angeordnet sind, sodass sie einander nicht berühren, und Seitenkanten (16s) der Vielzahl von zweiten geneigten Segmenten (16) angeordnet sind, sodass sie einander nicht berühren, wodurch ein Netz mit einer Vielzahl von rautenförmigen Räumen (17) gebildet wird, die von den ersten geneigten Segmenten (15) und zweiten geneigten Segmenten (16) umgeben sind,
die Vielzahl von sich in Umfangsrichtung erstreckenden Segmenten (14) eine Vielzahl von inneren sich in Umfangsrichtung erstreckenden Segmenten (18) hat, die ganz auf der Äquatorseite des Reifens angeordnet sind und sich in der Reifenumfangsrichtung fortlaufend von den axial inneren Enden (15i, 16i) der ersten geneigten Segmente (15) und der zweiten geneigten Segmente (16) erstrecken,
die Vielzahl von inneren sich in Umfangsrichtung erstreckenden Segmenten (18) eine Länge (La) in der Reifenumfangsrichtung haben, welche in einem Bereich von 50% bis 150% einer maximalen Länge (L1) in der Reifenumfangsrichtung der Vielzahl von rautenförmigen Räumen (17) liegt, und
beide Enden von jedem der Vielzahl von inneren sich in Umfangsrichtung erstreckenden Segmenten (18) mit zwei der in Umfangsrichtung benachbarten ersten geneigten Segmente (15) oder zwei der in Umfangsrichtung benachbarten zweiten geneigten Segmente (16) verbunden sind,
**dadurch gekennzeichnet, dass**
die sich in Umfangsrichtung erstreckenden Segmente (14) von jedem der Schulterverstärkungsteile (7S) ferner eine Vielzahl von äußeren sich in Umfangsrichtung erstreckenden Segmenten (19) haben, welche auf der axial äußersten Seite angeordnet sind und sich in der Reifenumfangsrichtung erstrecken, und
der gummibeschichtete Cordstreifen (9) in der Reihenfolge erstes geneigtes Segment (15), inneres sich in Umfangsrichtung erstreckendes Segment (18), erstes geneigtes Segment (15), äußeres sich in Umfangsrichtung erstreckendes Segment (19), erstes geneigtes Segment (15) und so weiter, und danach in der Reihenfolge zweites geneigtes Segment (16), inneres sich in Umfangsrichtung erstreckendes Segment (18), zweites geneigtes Segment (16), äußeres sich in Umfangsrichtung erstreckendes Segment (19), zweites geneigtes Segment (16) und so weiter gewickelt ist.

2. Motorradreifen (1) nach Anspruch 1, wobei
der axiale Abstand (Wa) zwischen
dem axial innersten Verstärkungscord (10) in jedem der Vielzahl von inneren sich in Umfangsrichtung erstreckenden Segmenten (18), und
dem Verstärkungscord (10) in dem Kronenverstärkungsteil (7C), welcher Cord in der axialen Richtung des Reifens zu dem vorgenannten axial innersten Verstärkungscord (10) benachbart ist,
weniger als 500% des axialen Abstands (Wb) zwischen den benachbarten Verstärkungscorden (10) in dem Kronenverstärkungsteil (7C) beträgt.

3. Motorradreifen (1) nach Anspruch 1 oder 2, wobei
das Kronenverstärkungsteil (7C) eine nahtlose Struktur hat, in welcher der gummibeschichtete Cordstreifen (9) spiralförmig aufgewickelt ist.

4. Motorradreifen (1) nach Anspruch 3, wobei
der gummibeschichtete Cordstreifen (9), der das Kronenverstärkungsteil (7C) bildet, nur einen Verstärkungscord (10) hat.

## Revendications

1. Pneumatique de moto (1) comprenant :
une carcasse toroïdale (6), et
une couche de renforcement de bande de roulement (7) disposée radialement à l'extérieur de la carcasse (6) dans une partie de bande de roulement (2),
dans lequel :
la couche de renforcement de bande de roulement (7) comprend :
une partie de renforcement de sommet (7C) formée par une bande de câble recouvert de caoutchouc (9) d'au moins un câble de renforcement caoutchouté (10) recouvert avec du caoutchouc de gommage (11), la bande de câble recouvert de caoutchouc (9) étant enroulée autour d'une région de sommet (2C) comprenant l'équateur (C) du pneu, et
une paire de parties de renforcement d'épaulement (7S) formées par une bande de câble recouvert de caoutchouc (9) qui est enroulée autour des régions d'épaulement (7S) des deux côtés de la région de sommet (2C),
dans lequel :
la partie de renforcement de sommet (7C) comprend :
une première partie s'étendant de manière circonférentielle (12) dans laquelle la bande de câble recouvert de caoutchouc (9) s'étend de manière sensiblement parallèle à la direction circonférentielle de pneu,
la paire de parties de renforcement d'épaulement (7S) comprennent chacune :
une pluralité de segments d'inclinaison (13) dans lesquels la bande de câble recouvert de caoutchouc (9) est inclinée par rapport à la direction circonférentielle de pneu, et
une pluralité de segments s'étendant de manière circonférentielle (14) dans lesquels la bande de câble recouvert de caoutchouc (9) s'étend sensiblement parallèlement à la direction circonférentielle de pneu,
dans lequel :
la pluralité de segments d'inclinaison (13) comprend :
une pluralité de premiers segments d'inclinaison (15) inclinés d'un côté par rapport à la direction circonférentielle de pneu, et une pluralité de seconds segments d'inclinaison (16) inclinés vers l'autre côté opposé aux premiers segments d'inclinaison (15) par rapport à la direction circonférentielle de pneu, et
des bords latéraux (15s) de la pluralité de premiers segments d'inclinaison (15) sont agencés afin de ne pas être en contact entre eux, et les bords latéraux (16s) de la pluralité de seconds segments d'inclinaison (16) sont agencés afin de ne pas être en contact entre eux, moyennant quoi une maille ayant une pluralité d'espaces rhombiques (17) entourés par les premiers segments d'inclinaison (15) et les seconds segments d'inclinaison (16), est formée,
la pluralité de segments s'étendant de manière circonférentielle (14) comprend une pluralité de segments internes s'étendant de manière circonférentielle (18) disposés du côté le plus à l'équateur du pneu, et s'étendant dans la direction circonférentielle de pneu de manière continue à partir des extrémités axialement internes (15i, 16i) des premiers segments d'inclinaison (15) et des seconds segments d'inclinaison (16),
la pluralité de segments internes s'étendant de manière circonférentielle (18) a une longueur (La) dans la direction circonférentielle de pneu qui est dans une plage de 50% à 150% d'une longueur maximum (L1) dans la direction circonférentielle de pneu de la pluralité d'espaces rhombiques (17), et
les deux extrémités de chacun de la pluralité de segments internes s'étendant de manière circonférentielle (18) sont raccordées à deux des premiers segments d'inclinaison (15) circonférentiellement adjacents ou deux des seconds segments d'inclinaison (16) circonférentiellement adjacents,
**caractérisé en ce que** :
les segments s'étendant de manière circonférentielle (14) de chacune des parties de renforcement d'épaulement (7S) comprennent en outre une pluralité de segments externes s'étendant de manière circonférentielle (19) qui sont disposés du côté axialement le plus à l'extérieur et s'étendent dans la direction circonférentielle de pneu, et
la bande de câble recouvert de caoutchouc (9) est enroulée dans l'ordre du premier segment d'inclinaison (15), du segment interne s'étendant de manière circonférentielle (18), du premier segment d'inclinaison (15), du segment externe s'étendant de manière circonférentielle (19), du premier segment d'inclinaison (15) et ainsi de suite, suivi par l'ordre du second segment d'inclinaison (16), du segment interne s'étendant de manière circonférentielle (18), du second segment d'inclinaison (16), du segment interne s'étendant de manière circonférentielle (19), du second segment d'inclinaison (16) et ainsi de suite.

2. Pneumatique de moto (1) selon la revendication 1, dans lequel :
la distance axiale (Wa) entre :
le câble de renforcement axialement le plus interne (10) dans chacun de la pluralité de segments internes s'étendant de manière circonférentielle (18), et
le câble de renforcement (10) dans la partie de renforcement de sommet (7C), lequel câble est adjacent, dans la direction axiale de pneu, au câble de renforcement axialement le plus interne (10) susmentionné,
est inférieure à 500% de la distance axiale (Wb) entre les câbles de renforcement (10) adjacents dans la partie de renforcement de sommet (7C).

3. Pneumatique de moto (1) selon la revendication 1 ou 2, dans lequel :
la partie de renforcement de sommet (7C) a une structure sans joint dans laquelle la bande de câble recouvert de caoutchouc (9) est enroulée en spirale.

4. Pneumatique de moto (1) selon la revendication 3, dans lequel :
la bande de câble recouvert de caoutchouc (9) formant la partie de renforcement de sommet (7C) n'a qu'un seul câble de renforcement (10).
